(19) Europäisches Patentamt
European Patent Office
Office européen des brevets

(11)  EP 3 451 241 A1

(12)  **EUROPEAN PATENT APPLICATION**
published in accordance with Art. 153(4) EPC

(43) Date of publication:
06.03.2019  Bulletin 2019/10

(51) Int Cl.:
*G06N 3/08* (2006.01)

(21) Application number: 16899902.7

(22) Date of filing: 05.05.2016

(86) International application number:
PCT/CN2016/081088

(87) International publication number:
WO 2017/185391 (02.11.2017 Gazette 2017/44)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 29.04.2016  CN 201610283838

(71) Applicant: Cambricon Technologies Corporation
Limited
Beijing 100190 (CN)

(72) Inventors:
• CHEN, Yunji
Beijing 100190 (CN)
• ZHI, Tian
Beijing 100190 (CN)
• LIU, Shaoli
Beijing 100190 (CN)
• GUO, Qi
Beijing 100190 (CN)
• CHEN, Tianshi
Beijing 100190 (CN)

(74) Representative: AWA Sweden AB
P.O. Box 5117
200 71 Malmö (SE)

(54) **DEVICE AND METHOD FOR PERFORMING TRAINING OF CONVOLUTIONAL NEURAL NETWORK**

(57)  A device and method for performing a backward training of convolutional neural network, wherein the device comprises an instruction storage unit, a controller unit, a data access unit, an interconnection module, a master operation module and a plurality of slave operation modules. For each layer, firstly, the input neuron vectors are selected for data according to the convolution window, then, based on using the selected data from the previous layer and the data gradient from the next layer as an input to an operation unit of the device, an convolution kernel is calculated and updated. Secondly, based on the convolution kernel, the gradient of the data, and the derivative function of a activation function, a data gradient output by the device is calculated and stored in a memory for outputting to the previous layer for backward propagation calculation. The present invention temporarily stores the data and the weight parameters involved in the calculation on the scratchpad memory, so that the backward training operation of convolutional neural network may be supported flexibly and effectively, and the execution performance of a large number of memory access applications may be improved.

FIG 3

EP 3 451 241 A1

## Description

### FIELD OF THE INVENTION

The present invention relates to a device and method for performing a backward training of convolutional neural network, which are used to perform a backward training operation of convolutional neural network efficiently and flexibly according to a backward training operation instruction of the convolutional neural network so as to well solve the problem in the current computer field that more and more algorithms contain a large number of backward training operations of convolutional neural network.

### BACKGROUND OF THE INVENTION

Convolutional neural network is an efficient recognition algorithm widely used in pattern recognition, image processing and other fields in recent years. It has the characteristics of simple structure, less training parameters, strong adaptability, translation, rotation and scaling. Since the feature detection layer of CNN/DNN learns from the training data, the displayed feature extraction is avoided while using CNN / DNN, and learning is performed implicitly from the training data; furthermore, since the weights of neuron in the same feature mapping plane are the same, the network may learn in parallel, which is also a great advantage of convolutional networks as compared with the network in which neurons are connected with each other.

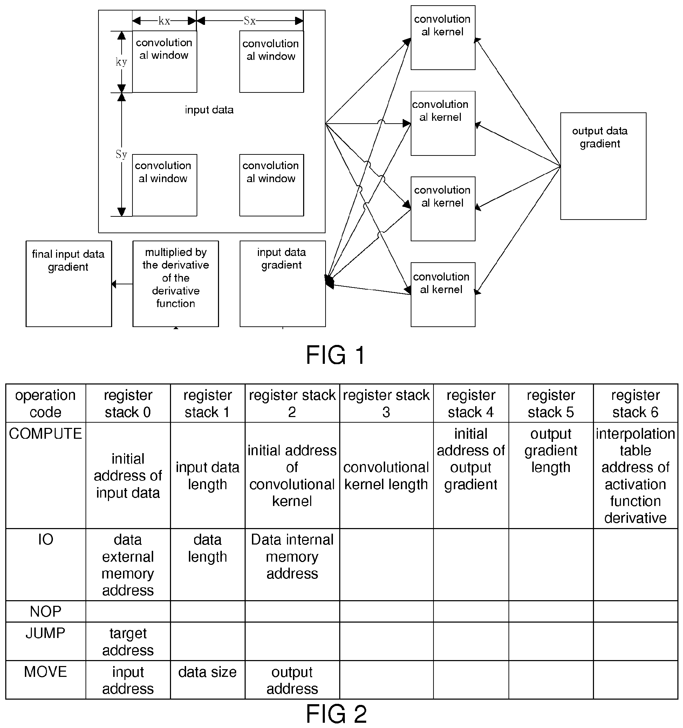

The flow chart for the training algorithm of convolutional neural network provided by the present invention, as shown in FIG. 1, includes two stages:

Stage one: the stage of forward propagation:

a) taking a sample (X, Yp) from the sample set and entering X into the network;
B) calculating the corresponding actual output Op.

At this stage, information is transformed step by step from the input layer to the output layer. This process is also the process that the network performs when it is running normally after training. In this process, the network performs calculations (in fact, the input is multiplied by the weight matrix of each layer to get the final output):

$$Op=Fn(\ldots(F2(F1(XpW(1))W(2))\ldots)W(n))$$

Stage two: the backward propagation stage

a) calculating the difference between the actual output Op and the corresponding ideal output Yp;

b) backward propagating to adjust the weight matrix by minimizing the error.

In the field of existing computer applications, applications in relation to the convolution operation are very common. The present invention focuses on the convolutional neural network, wherein the current mainstream devices that may perform such operations are as follows:
In prior art, one known solution for performing a backward training operation of convolutional neural network is to use a general purpose processor. This method performs general-purpose instructions through a general-purpose register file and general purpose functions to perform the backward training operations of convolutional neural network. However, one of the disadvantages for this method is that a single general-purpose processor is used for scalar computation, which has low computational performance when performing the backward training operations of convolutional neural network. When multiple general-purpose processors are used to perform in parallel, the mutual communication between general purpose processors may become a performance bottleneck.
In another prior art, a graphics processing unit (GPU) is used for vector calculations, wherein the backward training operations of convolutional neural network are performed by using a generic register file and a generic stream processing unit to execute general SIMD instructions. However, in above solutions, the GPU on-chip buffer is too small and requires continuous off-chip data transfer during large-scale backward training operations of convolutional neural network. The off-chip bandwidth has become a major performance bottleneck.

### OBJECTS AND SUMMARY OF THE INVENTION

(1) Technical problem to be solved

The purpose of the present invention is to provide a device supporting backward training operations of convolutional neural network so as to solve the problem of being limited to inter-chip communication and insufficient on-chip buffer for the prior art.

(2) Technical solutions

One aspect of the present invention provides a device for performing a backward training of convolutional neural network, comprising an instruction storage unit, a controller unit, a data access unit, an interconnection module, a master operation module and a plurality of slave operation modules, wherein:

the instruction storage unit is used to store instructions;
the controller unit is used to read the instruction from the instruction storage unit and translates it into a control signal for controlling the behaviors of other modules including the data access unit, the master operation module and the plurality of slave operation module;

the data access unit performs data or instruction read and write operation between the external address space and the device;

at the stage when the backward training of each neural network begins to calculate, the master operation module transfers an input data of this layer to all the slave operation modules through the interconnection module;

each slave operation module calculates a dot product of its own convolution kernel and the input data as the intermediate result part sum, and the convolution kernel corresponds to the intermediate result part sum;

after the calculation of the slave operation module is completed, the interconnection module combines level by level an output data part sum of each slave operation module into an intermediate result of this layer;

the master operation module uses the intermediate result of this layer to complete subsequent calculations in the calculation process of each layer.

Another aspect of the present invention provides a method of performing a convolutional neural network instruction.

(3) Beneficial effects

The device and supporting instructions for a backward training of convolutional neural network provided by the present invention store temporarily the input data and convolution kernel involved in computation to the scratchpad memory. In the case of only sending the same instruction, the convolutional neural network backward operation unit may more flexibly and effectively support data of different widths and may solve the problem of the correlation in the data storage, thereby improving the execution performance that include a large number operation tasks of convolutional neural networks. The instructions employed by the present invention has a simplified format, which makes the instructions easy to use and the supported vector length be flexible.

The present invention may be applied to the following (including but not limited to) scenes: various electronics such as data processing, robot, computer, printer, screener, telephone, tablet, smart terminal, cell phone, tachograph, navigator, sensor, camera, cloud server, camera, video camera, projector, watch, headset, mobile storage, wearable device; various transportation tools such as plane, ship, vehicle; various household appliances such as TV, A/C, microwave, fridge, electric cooker, humidifier, washing machine, electric light, gas stove, range hood; and various medical equipments including nuclear magnetic resonance, B ultrasound, electrocardiograph.

## BRIEF DESCRIPTION OF FIGURES

Fig. 1 is a flow chart of convolutional neural network backward training algorithm.

Fig. 2 is a schematic view of instructions for the device supporting the backward training of convolutional neural network provided by the present invention.

Fig. 3 is a schematic block view of the overall structure of the device for performing the training operation of artificial neural network convolutional layer, according to the embodiments of the present invention.

Fig. 4 is a schematic view illustrating the structure of interconnection module) in the device for performing the training operation of artificial neural network convolutional layer, according to the embodiments of the present invention.

Fig. 5 is an example block view of the structure of the master operation module in the device for performing the training operation of artificial neural network convolutional layer, according to the embodiments of the present invention.

Fig. 6 is an example block view of the structure of the slave operation module in the device for performing the training operation of artificial neural network convolutional layer, according to the embodiments of the present invention.

Fig. 7 is an example block view of the process of the training operation for neural network convolutional layer, according to the embodiments of the present invention.

## DETAILED DESCRIPTION OF THE EMBODIMENTS

The present invention provides a device and supporting instructions for a backward training of convolutional neural network, comprising a storage unit, a register unit and a convolutional neural network backward training operation unit, wherein the storage unit stores data, an input/output data gradient and a convolution kernel therein, the register unit stores therein data, an input/output data gradient and an address for storing the convolution kernel. Firstly, the input neuron vector is based on the convolution window, and data selection is performed on the output data from the previous layer to obtain the input data of the current layer, then the convolution kernel is calculated and updated based on the gradient of the selected input data and the output data from the next layer of the current layer. Secondly, based on the gradient of the convolution kernel and the output data and the derivative function of the activation function, the gradient of the input data is calculated and stored in the memory for the calculation of next layer. The input data gradient is taken as an output data gradient for the next layer. The present invention stores temporarily the input data and convolution kernel involved in operation into the scratchpad memory, which allows for more flexible and effective support of the data with different width during the convolutional neural network backward training operation so that the execution performance that include a large number backward training operation tasks of convolutional neural networks is improved.

Fig. 1 is a view of the convolutional neural network backward training algorithm. As shown in the figure, it includes an input data of convolutional neural network, a derivative function of the activation function, a gradient of the input data and a convolutional kernel.

First, in the calculation process of each layer of its backward training, according to the convolution window, the input data corresponding to the operation module of the current layer is firstly selected from the output data of the previous layer of the current layer, then based on this part of the input data and the data gradient from the next layer of the current layer, the operation of the vector multiplying by the vector is performed to obtain the gradient of the convolution kernel, which is a scalar quantity. The gradient calculation process for the convolution kernel is $dw = \sum x_i ds_i$. That is, each slave operation module multiplies the data $x$ from the previous layer by the data gradient $ds$ from the next layer and after the convolution window has traversed the data conducts sum calculation to obtain the gradient corresponding to the convolution kernel, and finally the master operation module solves the square average $c = \sqrt{\sum dw^2}$ corresponding to the gradient of the convolution kernel of all the slave operation modules in the current layer. When c is greater than the threshold t, all gradients are scaled $dw' = dw/c*t$. In the end, the value of the convolution kernel is updated according to the gradient of the new convolution kernel. At the same time, the master operation module may obtain the data gradient $dx = h(x)\sum w_i ds_i$ to be output to the previous layer according to the input data of the convolution kernel and the current layer, wherein ds is the output data gradient of the current layer which is related to the input data x of the current layer, w is the convolution kernel data corresponding to the gradient ds of the input data x and output data, and h(x) is the value of the derivative of the activation function corresponding to this input data. That is, the convolution kernel is multiplied by and added with the data gradient from the next layer, and then multiplied by the value of the derivative of the activation function corresponding to the input data of the current layer to obtain the data gradient output to the previous layer; and finally, the gradient is output to the memory for the backward training operation of the previous layer of convolutional neural network.

The convolution window selects the input data of the same size as the convolution kernel on the input data sets of size and H based on the size $k_x$ and $k_y$ of the convolution kernel from the very beginning, and uses the horizontal shift vector sum $S_x$ and $S_y$ of the convolution window to perform firstly a horizontal translation and secondly perform a vertical translation for traversing the entire input image. Fig. 2 is a schematic view of the format of the instruction set provided by the present invention. As shown in Fig. 2, the instruction of convolutional neural network backward training operation includes one operation code and 7 operation fields, wherein the operation code is used to indicate the function of the instruction of the convolutional neural network backward training operation and the convolutional neural network operation unit may perform convolutional neural network backward training operation by identifying the operation code; the operation field is used to indicate the data information of the instruction of the convolutional neural network backward training operation, wherein the data information may be an immediate or a register number including the start address and the data length of the input data, the start address and the data length of the convolution kernel, the start address and the data length of the input gradient and the type of activation function. The instruction set includes a convolutional neural network COMPUTE instruction with different functions and a CONFIG instruction, an IO instruction, a NOP instruction, a JUMP instruction and a MOVE instruction. In one embodiment, the COMPUTE instruction includes:

A convolutional neural network sigmoid instruction. According to this instruction, the device fetches an input data and a convolution kernel of specified sizes respectively from the designated address of the Scratchpad, performs a convolution operation in the convolution operation component, and then outputs the result for a sigmoid activation.

A convolutional neural network TanH instruction. According to this instruction, the device fetches an input data and a convolution kernel of specified sizes respectively from the designated address of the Scratchpad, performs a convolution operation in the convolution operation component, and then outputs the result for a TanH activation.

A convolutional neural network ReLU instruction. According to this instruction, the device fetches an input data and a convolution kernel of specified sizes respectively from the designated address of the Scratchpad, performs a convolution operation in the convolution operation component, and then outputs the result for a ReLU activation.

A convolutional neural network group instruction. According to this instruction, the device fetches an input data and a convolution kernel of specified sizes respectively from the designated address of the Scratchpad, performs a convolution operation in the convolution operation component after dividing the group after dividing group, and then outputs the result for activation.

IO instruction allows for reading in the input data required in operation from the external address space and storing the data back to the external space after the operation is completed.

The NOP instruction is responsible for clearing control signals in all control signal buffer queues in the current device to ensure that all instructions before the NOP instruction have been instructed. The NOP instruction itself does not contain any operations;

the JUMP instruction is responsible for controlling the jump of the next instruction address to be read from the instruction storage unit for the jump of the control flow;

the MOVE instruction is responsible for moving the data at a certain address space in the device's internal address space to another address in the device's internal address space. This process is independent of the operation unit and does not occupy the resources of the operation unit during operation.

In order that the objectives, technical schemes and advantages of the present invention will become more apparent, the present invention will be described in more detail in conjunction with specific embodiments and with reference to the drawings and examples above.

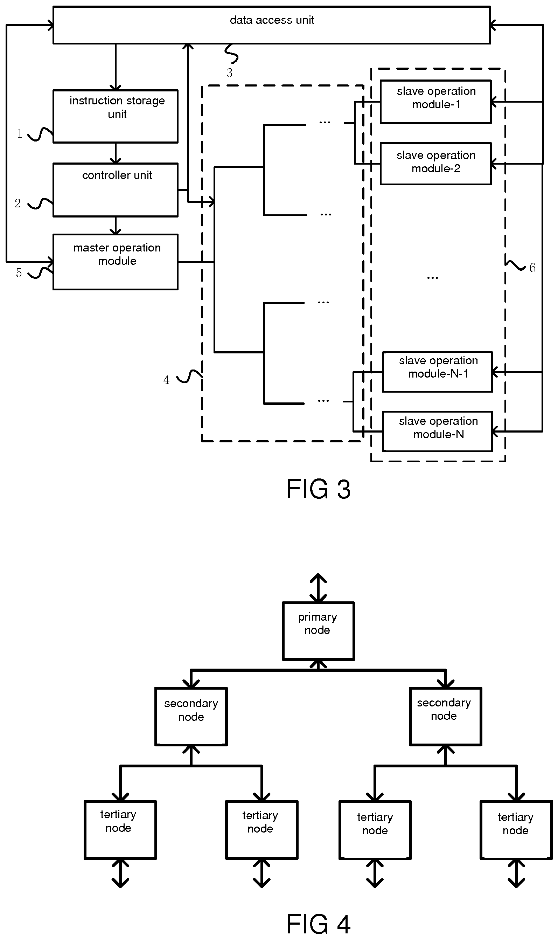

Fig. 3 is a schematic view of structure for the operation device the backward training of convolutional neural network provided by the present invention. As shown in Fig. 3, the device includes an instruction storage unit 1, a controller unit 2, a data access unit 3, an interconnection module 4, a master operation module 5 and a plurality of slave operation modules 6. The instruction storage unit 1, controller unit 2, data access unit 3, interconnection module 4, master operation module 5 and the plurality of slave operation modules 6 may implemented by a hardware circuit (e.g. including but not limited to FPGA, CGRA, ASICs, analog circuits and memristors).

The instruction storage unit 1 reads an instruction through the data access unit 3 and caches the read instruction.

The controller unit 2 reads the instruction from the instruction storage unit 1 and translates it into a control signal for controlling the behavior of other modules including the data access unit 3, the master operation module 5 and the plurality of slave operation module 6.

The data access unit 3 may access an external address space and directly reads and writes data, data gradients, and convolution kernel values to each of the buffer units inside the device according to the numerical values such as the data size required in the calculation process, thereby completing above-mentioned loading and storage.

The interconnection module 4 constitutes a data path between the master operation module and the plurality of slave operation modules, and the interconnection module is any one of the following structures: a tree structure, a ring structure, a grid structure, a hierarchical interconnection and a bus structure.

Fig. 4 illustrates one structure of the interconnection module 4. The interconnection module 4 constitutes a data path between the master operation module 5 and the plurality of slave operation modules 6 and has an H-tree structure. H-tree is a binary tree path formed by a plurality of nodes. Each node equally sends the upstream data to two downstream nodes, merges the data returned by the two downstream nodes and returned them to the upstream nodes. For example, in the phase of starting the training of the convolutional neural network, the neuron data in the master operation module 5 is sent to each slave operation module 6 through the interconnection module 4; after the operation process of the slave operation module 6 is completed, the convolution kernel is first updated, then the value of each of the neurons output from each operation module is spliced level by level into a complete vector formed by neurons in the interconnection module. For example, assuming that there are a total of N slave operation modules in the device, the intermediate result vector is segmented by N, wherein each segment has N elements and the i-th slave operation module calculates the i-th element in each segment. N elements are spliced into a vector of length N through the interconnection module and returned to the master operation module. Therefore, if there are only N output neurons in the network, each slave operation unit only has to output the value of a single neuron. If the network has m*N output neurons, each slave operation unit has to output m neuron values.

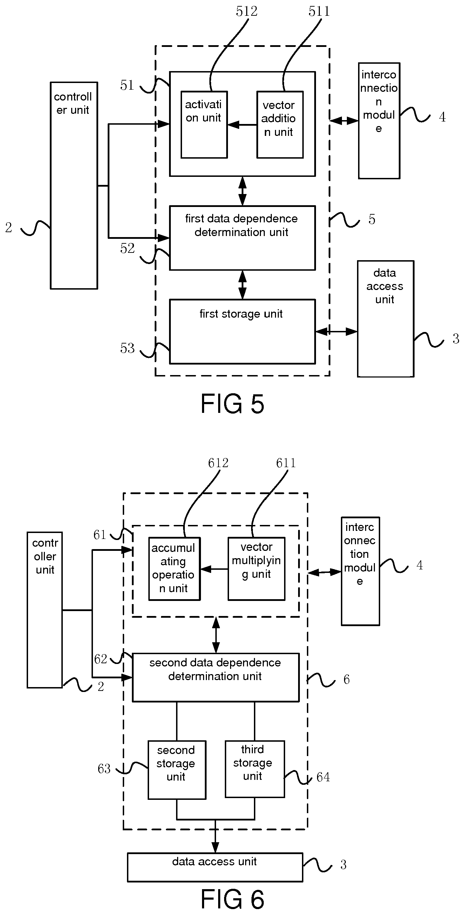

Fig. 5 is an example block view of the structure of the master operation module 5 in the device for performing the backward training operation of artificial neural network convolutional layer, according to the embodiments of the present invention. As shown in Fig. 5, the master operation module 5 includes a first operation unit 51, a first data dependence determination unit 52, and the first storage unit 53.

Among those, the first operation unit 51 includes a vector addition unit 511 and an activation unit 512. The first operation unit 51 receives the control signal from the controller unit to complete various operation functions of the master operation module 5, and the vector addition unit 511 is used to implement the addition bias operation in the forward propagation process of the convolutional neural network. The input of the component is the biased vector read from the external address space, and the intermediate result vector transmitted back from the slave operation module 6 through the interconnection module 4, and the output thereof is a vector-added value. The activation unit 512 is used to implement a multiplication operation for the derivative function of the artificial neural network convolution layer activation function. The input of the component is the intermediate result transmitted back from the slave operation module 6 through the interconnection module 4, or the output result of the vector addition unit 511, and the output thereof is the output data gradient vector multiplied by the derivative of the activation function.

The first data dependence determination unit 52 is a port where the first operation unit 51 reads and writes the first storage unit 53 and ensures the read and write consistency of the data in the neuron buffer unit. At the same time, the first data dependence determination unit 52 is also responsible for sending the read data to the slave operation module through the interconnection module 4, and the output data of the slave operation module 6 is sent directly to the first operation unit 51 through the interconnection module 4. The instruction output from the controller unit 2 is sent to the operation unit 51 and the first data dependence determination unit 52 to control their behaviors;

the first storage unit 53 is used to cache the input data and the output data, the gradient of the input data and the convolutional kernel used by the master operation module 5 in the calculation process.

Fig. 6 is an example block view of the structure of the slave operation module 6 in the device for performing the backward training operation of artificial neural network convolutional layer, according to the embodiments of the present invention. As shown in Fig. 6, each slave operation module 6 includes a second operation unit 61, a data dependence determination unit 62, a second storage unit 63 and a third storage unit 64.

The second operation unit 61 first updates the convolution kernel according to the gradient of the input data and the output data. Then the second operation unit 61 receives a control signal sent by the controller unit 2 and performs a dot product operation. The second operation unit 61 includes a vector multiplying unit 611 and an accumulating unit 612. Among them, the vector multiplying unit 611 is used to implement the alignment multiplication of the neuron vector and the weight vector, and the accumulation unit 612 is used to implement the operation of accumulating each item of the vector together.

The second data dependence determination unit 62 is responsible for the reading and writing operation to the neuron buffer unit in the calculation process. The third storage unit 62, before performing the read and writing operation, firstly guarantees that there is no consistency conflict in reading and writing among instructions. For example, all control signals addressed to the data dependence unit 62 are stored in an instruction queue internal to the data dependence unit 62 in which if the range of reading data for the read instruction conflicts with the range of writing data for the write instruction located in front of the queue, then the instruction should not be performed until the dependent write instruction is performed.

The second storage unit 63 caches the data of the input neuron vector data and the output neuron value data of the slave operation module 6.

The third storage unit 64 caches the convolutional kernel data required by the slave operation module 6 in the calculation process. For each slave operation module 6, only partial convolution kernels corresponding to partial output neurons are stored. The output neurons are segmented according to the number N of operation units, and the weight corresponding to the n-th output neuron of each segment is stored in the n-th slave operation unit.

The slave operation module 6 implements the parallelism of the dot product operation in the artificial neural network convolution kernel layer operation process. When corresponded to the data within a single convolution window, the process corresponding to a single convolution kernel in the artificial neural network convolution layer is $s = s(\sum wx+b)$, and each artificial neural network convolution layer contains multiple convolution kernels. Therefore, according to the convolution kernel, the calculation task for entire convolution layer may be divided into a plurality of parallel independent tasks, the output data and the input data are column vectors, and each of the slave computing modules 6 calculates the dot product of the part of the output data and the corresponding convolution kernel with the input data. Each output vector obtained is the pre-activation value of the final result, and these parts are combined in the interconnection module 4 step by step to obtain the final result. Therefore, the calculation process becomes a part of the parallel calculation process and the subsequent combination process. Each of the slave operation modules 6 calculates the output neuron value, and all of the output neuron values are sliced in the interconnection module 4 to obtain the intermediate result vector. Each slave operation module 6 only has to calculate the output neuron value corresponding to this module in the intermediate result vector y. The interconnection module 4 combines all the neuron values output from the slave operation module 6 to obtain the final intermediate result vector y.

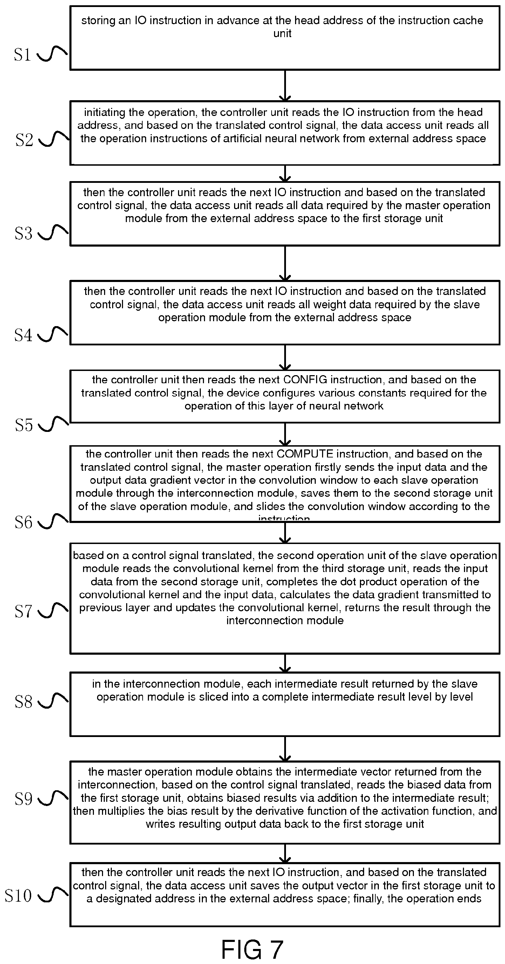

Fig. 7 is a flow chart of the device for the training operation of convolutional neural network backward performing the convolutional neural network instruction, provided by the embodiments of the present invention. As shown in Fig. 7, the process of performing the convolutional neural network instruction includes:

At step S1, storing an IO instruction in advance at the head address of the instruction storage unit 1.

At step S2, initiating the operation, the controller unit 2 reads the IO instruction from the head address of the instruction storage unit 1, and based on the translated control signal, the data access unit 3 reads all the corresponding operation instructions of convolutional neural network from external address space and cache them in the instruction storage unit 1.

At step S3, then the controller unit 2 reads the next IO instruction from the instruction storage unit, and based on the translated control signal, the data access unit 3 reads all data (e.g. including input data, interpolation tables, constant tables, bias data) required by the master operation module 5 from the external address space to the first storage unit 53 of the master operation module 5.

At step S4, then again the controller unit 2 reads the next IO instruction from the instruction storage unit, and based on the translated control signal, the data access unit 3 reads the convolution kernel data required by the slave operation module 6 from the external address space.

At step S5, the controller unit 2 then reads the next CONFIG instruction from the instruction storage unit, and based on the translated control signal, the device configures various constants required for the operation of this layer of neural network. For example, the first operation unit 51 and the second operation unit 61 configure the value of the register in the unit according to the parameter configuration in the control signal, for example, the parameter including, for example the data required by the activation function.

At step S6, the controller unit 2 then reads the next COMPUTE instruction from the instruction storage unit, and based on the translated control signal, the master operation 5 firstly sends the input data of the current layer and the data gradient vector of the next layer in the convolution window to each slave operation module 6 through the interconnection module 4, saves them to the second storage unit 63 of the slave operation module 6, and then moves the convolution window according to the instruction.

At step S7, based on a control signal translated by the COMPUTE instruction, the second operation unit 61 of the slave operation module 6 reads the convolutional kernel vector from the third storage unit 64, reads the input data from the second storage unit 63, completes the dot product operation of the convolutional kernel vector and the input data, updates the third storage unit 64, calculates the output data gradient and returns the intermediate result through the interconnection module. At step S8, in the interconnection module 4, each intermediate result returned by the slave operation module 6 is sliced into a complete intermediate result vector level by level. At step S9, the master operation module 5 obtains the value returned from the interconnection module 4, reads the biased vector from the first storage unit 53 based on the control signal translated by the COMPUTE instruction, and adds the vector with the vector returned by the interconnection module 4 through the vector addition unit 512, and then the activation unit 511 multiplies the added result by the derivative of the activation function and writes the final output back to the first storage unit 53.

at step S10, then the controller unit 2 reads the next IO instruction from the instruction storage unit, and based on the translated control signal, the data access unit 3 saves the output data gradient in the first storage unit 53 to a designated address in the external address space; finally, the operation ends.

Through employing a device and an instruction set for performing a backward training operation of artificial neural network convolutional layer, the problems of insufficient CPU and GPU performance and large front-end decoding overhead are solved in the process of performing operation of artificial neural network convolutional layer. It effectively improves the support for backward training operation of artificial neural network convolutional layer.

Through employing a dedicated on-chip buffer for backward training operation of artificial neural network convolutional layer, the reusability of input neuron and convolution kernel data is fully tapped to avoid repeatedly reading these data into memory, reducing memory access bandwidth and avoiding the problem that the memory bandwidth becomes a bottleneck in the performance of backward training operation for the multi-layer artificial neural networks convolutional layer.

Processes or methods depicted in the preceding figures may be implemented by the processing logic including hardware (eg, circuitry, dedicated logic, etc.), firmware, software (eg, software embodied on a non-transitory computer readable medium) or the combination thereof to perform. Although the processes or methods are described above in terms of certain sequential operations, it should be understood that some of the described operations may be performed in a different order. In addition, some operations may be performed in parallel rather than sequentially.

In the foregoing specification, various embodiments of the present invention have been described with reference to specific exemplary embodiments thereof. Obviously, various modifications may be made to the embodiments without departing from the broader spirit and scope of the invention as set forth in the appended claims. Accordingly, the specification and drawings are to be regarded in an illustrative rather than a restrictive sense.

**Claims**

1. A device for performing a backward training of convolutional neural network, comprising an instruction storage unit, a controller unit, a data access unit, an interconnection module, a master operation module and a plurality of slave operation modules, wherein:

   the instruction storage unit is used to store instructions;
   the controller unit is used to read the instruction from the instruction storage unit and translates it into a control signal for controlling the behaviors of other modules including the data access unit, the master operation module and the plurality of slave operation module;
   the data access unit performs data or instruction read and write operation between the external address space and the device; at the stage when the backward training of each neural network begins to calculate, the master operation module transfers an input data of this layer to all the slave operation modules through the interconnection module;
   each slave operation module calculates a dot product of its own convolution kernel and the input data as the intermediate result part sum, and the convolution kernel corresponds to the intermediate result part sum;

after the calculation of the slave operation module is completed, the interconnection module combines level by level an intermediate result sum of each slave operation module into an intermediate result of this layer;

the master operation module uses the intermediate result of this layer to complete subsequent calculations in the calculation process of each layer.

2. The device according to claim 1, wherein the master operation module includes a first operation unit and a first storage unit, wherein:

the first operation unit includes a vector addition unit and an activation unit; the first operation unit receives the control signal from the controller unit and completes various operation functions of the master operation module;

the vector addition unit is used to implement the addition bias operation in the backward training operation of the convolutional neural network; the input of this unit is the biased vector read from the external address space, and the intermediate result transmitted back from the slave operation module through the interconnection module, and the output thereof is a biased result after the biased vector and the intermediate result are added;

the activation unit is used to implement a multiplication operation for the derivative function of the convolution neural network activation function; the input of this unit is the intermediate result transmitted back from the slave operation module through the interconnection module or a biased result output by the vector addition unit, and the output thereof is an output data of the intermediate result or biased result multiplied by the derivative of the activation function;

the first storage unit stores the input data and the output data, the gradient of the input data and the convolutional kernel used by the master operation module in the calculation process.

3. The device according to claim 1, wherein
each slave operation module includes a second operation unit, a second storage unit and a third storage unit;

the second operation unit includes a vector multiplying unit and an accumulating unit, wherein the vector multiplying unit is used to implement the alignment multiplication of the input data and the convolutional kernel, and the accumulation unit is used to implement the operation of adding each item of alignment multiplication result together;

the second storage unit stores the sum of the input data and the output intermediate result part of the slave operation of the slave operation module;

the third storage unit stores the convolutional kernel data required by the slave operation module in the calculation process.

4. The device according to claim 1, wherein
First, in the calculation process of each layer of its backward training, according to the convolution window, the corresponding input data is firstly selected from the output data of the previous layer of the current layer, then based on this part of the input data and the data gradient from the next layer of the current layer, the operation of the vector multiplying by the vector is performed to obtain the gradient of the convolution kernel, which is a scalar quantity; the gradient calculation process for the convolution kernel is; that is $dw = \sum x_i ds_i$, each slave operation module multiplies the input data from the previous layer by the output data gradient from the next layer and after the convolution window has traversed the data conducts sum calculation to obtain the gradient corresponding to the convolution kernel, and finally the master operation module solves the square average $c = \sqrt{\sum dw^2}$ corresponding to the gradient of the convolution kernel of all the slave operation modules in the current layer; when c is greater than the threshold t, all gradients are scaled $dw' = dw/c*t$; in the end, the value of the convolution kernel is updated according to the gradient of the scaled convolution kernel.

5. The device according to claim 1, wherein the master operation module obtains the data gradient $dx = h(x)\sum w_i ds_i$ to be output to the previous layer according to the input data of the current layer and the convolution kernel, wherein ds is the output data gradient of the current layer which is related to the input data x of the current layer, w is the convolution kernel data corresponding to the gradient ds of the input data x and output data, and h(x) is the value of the derivative of the activation function corresponding to this input data; that is, the convolution kernel is multiplied by and added with the data gradient from the next layer, and then multiplied by the value of the derivative of the activation function corresponding to the input data of the current layer to obtain the data gradient output to the previous layer; and finally, the gradient is output to the external address space for the convolutional backward operation of the previous layer.

6. The device according to claim 1, wherein the interconnection module constitutes a data path between the master operation module and the plurality of slave operation modules, and the interconnection module is any one of the following structures: a tree structure, a ring structure, a grid structure, a hierarchical interconnection and a bus structure.

7. The device according to claim 1, wherein the convolution window, based on the size $k_x$ and $k_y$ of the convolution kernel, uses the horizontal shift vector $S_x$ and $S_y$ of the convolution window on the input data set of size W*H to perform a horizontal translation firstly and secondly perform a vertical translation for traversing the entire data set.

8. The device according to claim 1, wherein according to the convolution kernel, the calculation task for entire convolution layer may be divided into a plurality of parallel independent tasks, the output data and the input data are column vectors, and each of the slave computing modules calculates the dot product of the part of the output data and the corresponding convolution kernel with the input data, and these parts are combined in the interconnection module step by step to obtain the final result.

9. The device according to claim 1, wherein the instruction of convolutional neural network backward training operation includes one operation code and 7 operation fields, wherein the operation code is used to indicate the function of the instruction of the convolutional neural network backward training operation; the operation field is used to indicate the data information of the instruction of the convolutional neural network backward training operation, wherein the data information is an immediate or a register number including the start address and the data length of the input data, the start address and the data length of the convolution kernel, the start address and the data length of the input gradient and the type of activation function.

10. A method of performing a convolutional neural network instruction, comprising:

at step S1, storing an IO instruction in advance at the head address of the instruction storage unit;
at step S2, initiating the operation, the controller unit reads the IO instruction from the head address of the instruction storage unit, and based on the translated control signal, the data access unit reads all the corresponding operation instructions of convolutional neural network from external address space and cache them in the instruction storage unit;
at step S3, then the controller unit reads the next IO instruction from the instruction storage unit, and based on the translated control signal, the data access unit reads all data required by the master operation module from the external address space to the first storage unit of the master operation module;
at step S4, then again the controller unit reads the next IO instruction from the instruction storage unit, and based on the translated control signal, the data access unit reads the convolution kernel data required by the slave operation module from the external address space;
at step S5, the controller unit then reads the next CONFIG instruction from the instruction storage unit, and based on the translated control signal, configures various constants required for the operation of this layer of neural network;
at step S6, the controller unit then reads the next COMPUTE instruction from the instruction storage unit, and based on the translated control signal, the master operation firstly sends the input data of the current layer and the data gradient vector of the next layer in the convolution window to each slave operation module through the interconnection module, saves them to the second storage unit of the slave operation module, and then moves the convolution window according to the instruction;
at step S7, based on a control signal translated by the COMPUTE instruction, the second operation unit of the slave operation module reads the convolutional kernel vector from the third storage unit, reads the input data from the second storage unit,
completes the dot product operation of the convolutional kernel vector and the input data, updates the third storage unit, calculates the sum of the intermediate result part of the output data gradient and returns the intermediate result through the interconnection module;
at step S8, in the interconnection module, each intermediate result part sum returned by the slave operation module is sliced into a complete intermediate result level by level;
at step S9, the master operation module obtains the intermediate result returned from the interconnection module, reads the biased vector from the first storage unit based on the control signal translated by the COMPUTE instruction, and adds the result with the intermediate result returned by the interconnection module through the vector addition unit, and then the activation unit multiplies the added result by the derivative of the activation function to obtain the output data gradient and writes the output data gradient back to the first storage unit in the master operation module;
at step S10, then the controller unit reads the next IO instruction from the instruction storage unit, and based on the translated control signal, the data access unit saves the output data gradient in the first storage unit to a designated address in the external address space; finally, the operation ends.

FIG 1

| operation code | register stack 0 | register stack 1 | register stack 2 | register stack 3 | register stack 4 | register stack 5 | register stack 6 |
|---|---|---|---|---|---|---|---|
| COMPUTE | initial address of input data | input data length | initial address of convolutional kernel | convolutional kernel length | initial address of output gradient | output gradient length | interpolation table address of activation function derivative |
| IO | data external memory address | data length | Data internal memory address | | | | |
| NOP | | | | | | | |
| JUMP | target address | | | | | | |
| MOVE | input address | data size | output address | | | | |

FIG 2

FIG 3

FIG 4

FIG 5

FIG 6

| | |
|---|---|
| S1 | storing an IO instruction in advance at the head address of the instruction cache unit |
| S2 | initiating the operation, the controller unit reads the IO instruction from the head address, and based on the translated control signal, the data access unit reads all the operation instructions of artificial neural network from external address space |
| S3 | then the controller unit reads the next IO instruction and based on the translated control signal, the data access unit reads all data required by the master operation module from the external address space to the first storage unit |
| S4 | then the controller unit reads the next IO instruction and based on the translated control signal, the data access unit reads all weight data required by the slave operation module from the external address space |
| S5 | the controller unit then reads the next CONFIG instruction, and based on the translated control signal, the device configures various constants required for the operation of this layer of neural network |
| S6 | the controller unit then reads the next COMPUTE instruction, and based on the translated control signal, the master operation firstly sends the input data and the output data gradient vector in the convolution window to each slave operation module through the interconnection module, saves them to the second storage unit of the slave operation module, and slides the convolution window according to the instruction |
| S7 | based on a control signal translated, the second operation unit of the slave operation module reads the convolutional kernel from the third storage unit, reads the input data from the second storage unit, completes the dot product operation of the convolutional kernel and the input data, calculates the data gradient transmitted to previous layer and updates the convolutional kernel, returns the result through the interconnection module |
| S8 | in the interconnection module, each intermediate result returned by the slave operation module is sliced into a complete intermediate result level by level |
| S9 | the master operation module obtains the intermediate vector returned from the interconnection, based on the control signal translated, reads the biased data from the first storage unit, obtains biased results via addition to the intermediate result; then multiplies the bias result by the derivative function of the activation function, and writes resulting output data back to the first storage unit |
| S10 | then the controller unit reads the next IO instruction, and based on the translated control signal, the data access unit saves the output vector in the first storage unit to a designated address in the external address space; finally, the operation ends |

FIG 7

<table>
<tr><td colspan="2"><strong>INTERNATIONAL SEARCH REPORT</strong></td><td>International application No.<br><strong>PCT/CN2016/081088</strong></td></tr>
</table>

**A. CLASSIFICATION OF SUBJECT MATTER**

G06N 3/08 (2006.01) i
According to International Patent Classification (IPC) or to both national classification and IPC

**B. FIELDS SEARCHED**

Minimum documentation searched (classification system followed by classification symbols)

G06N

Documentation searched other than minimum documentation to the extent that such documents are included in the fields searched

Electronic data base consulted during the international search (name of data base and, where practicable, search terms used)

CNPAT, WPI, EPODOC, CNKI, GOOGLE: GUO, Qi; CHEN, Yunji; CHEN, Tianshi; ZHI, Tian; LIU, Shaoli; neural network, inverse, convolution kernel, neural, network, convolutional neural network, CNN, back propagation, BP, train, learn, error, convolution, kernel, dot product, dot metrix

**C. DOCUMENTS CONSIDERED TO BE RELEVANT**

| Category* | Citation of document, with indication, where appropriate, of the relevant passages | Relevant to claim No. |
|---|---|---|
| Y | CN 103150596 A (BAIDU ONLINE NETWORK TECHNOLOGY (BEIJING) CO., LTD.), 12 June 2013 (12.06.2013), description, paragraphs [0030]-[0038], and figures 2, 3 and 6 | 1, 3, 6 |
| Y | YANG, Xin, "Traffic Sign Recognition Research and Application Based on Convolutional Neural Network", ELECTRONIC TECHNOLOGY & INFORMATION SCIENCE, CHINA MASTER'S THESES FULL-TEXT DATABASE, volume /, number 07, 15 July 2015 (15.07.2015), ISSN: 1674-0246, the main body, pages 14-15, chapter 3.3 | 1, 3, 6 |
| A | CN 104103033 A (SICHUANG JIUCHENG INFORMATION TECHNOLOGY CO., LTD.), 15 October 2014 (15.10.2014), the whole document | 1-10 |
| A | CN 104537393 A (DALIAN UNIVERSITY OF TECHNOLOGY), 22 April 2015 (22.04.2015), the whole document | 1-10 |
| A | US 2015294219 A1 (GOOGLE INC.), 15 October 2015 (15.10.2015), the whole document | 1-10 |

☐ Further documents are listed in the continuation of Box C. ☒ See patent family annex.

| | |
|---|---|
| \*     Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| 16 January 2017 (16.01.2017) | **08 February 2017 (08.02.2017)** |

| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br><br>**LI, Na**<br><br>Telephone No.: (86-10) **62414068** |

Form PCT/ISA/210 (second sheet) (July 2009)

## INTERNATIONAL SEARCH REPORT
Information on patent family members

International application No.

**PCT/CN2016/081088**

| Patent Documents referred in the Report | Publication Date | Patent Family | Publication Date |
|---|---|---|---|
| CN 103150596 A | 12 June 2013 | CN 103150596 B | 23 December 2015 |
| CN 104103033 A | 15 October 2014 | None | |
| CN 104537393 A | 22 April 2015 | None | |
| US 2015294219 A1 | 15 October 2015 | WO 2015157718 A2 | 15 October 2015 |

Form PCT/ISA/210 (patent family annex) (July 2009)